# EUROPÄISCHE PATENTSCHRIFT

(11) **EP 2 697 013 B1**
(45) Veröffentlichungstag und Bekanntmachung des Hinweises auf die Patenterteilung: **30.09.2015**
(21) Anmeldenummer: 12711842.0
(22) Anmeldetag: 26.03.2012
(51) Int. Cl.: B23K 26/03, B23K 26/04, B23K 26/08, G01J 1/04, G01J 1/42

(54) **VORRICHTUNG ZUR FOKUSSIERUNG EINES LASERSTRAHLS UND VERFAHREN ZUM ÜBERWACHEN EINER LASERBEARBEITUNG**
DEVICE FOR FOCUSING A LASER BEAM AND METHOD FOR MONITORING A LASER MACHINING PROCESS
DISPOSITIF DE FOCALISATION D'UN FAISCEAU LASER ET PROCÉDÉ PERMETTANT DE SURVEILLER UN USINAGE AU LASER

(30) Priorität: 12.04.2011 DE 102011007176
(43) Veröffentlichungstag der Anmeldung: 19.02.2014
(73) Patentinhaber: Trumpf Werkzeugmaschinen GmbH + Co. KG, 71254 Ditzingen (DE)
(72) Erfinder: WEICK, Jürgen-Michael, 71679 Asperg (DE)
(74) Vertreter: Kohler Schmid Möbus Patentanwälte
(86) Internationale Anmeldenummer: PCT/EP2012/055278
(87) Internationale Veröffentlichungsnummer: WO 2012/139873

(56) Entgegenhaltungen:
- DE-A1-102006 007 750
- DE-C1- 19 630 607
- JP-A- 4 205 111
- US-A- 5 132 950
- US-A1- 2005 057 746
- US-B1- 6 410 906

## Beschreibung

Die vorliegende Erfindung betrifft eine Vorrichtung, insbesondere einen Laserbearbeitungskopf, zur Fokussierung eines Laserstrahls auf ein Werkstück, und ein Verfahren zum Überwachen einer Laserbearbeitung mittels eines fokussierten Laserstrahls gemäß dem Oberbegriff der Ansprüche 1 und 16 (siehe, z.B. DE 196 30 60701).

Aus der DE 10 2007 053 632 ist ein Verfahren zur koaxialen Strahlanalyse an optischen Systemen bekannt geworden. Dort wird ein definierter Prozentsatz des (Laser-)Strahles koaxial oder unter einem geringen Winkel über eine lotrecht zum Hauptstrahl befindliche optische Fläche, insbesondere ein Schutzglas, rückreflektiert und für die Strahlanalyse mit Hilfe eines Strahlteilers vom Hauptstrahl separiert. Um bildseitig eine Trennung von Teilstrahlen vornehmen zu können, die an der Oberseite und der Unterseite des optischen Elements reflektiert werden, kann das optische Element einen Keilwinkel aufweisen. Durch die getrennte Vermessung der Teilstrahlen soll eine Verschmutzung an einer Seite des optischen Elements diagnostiziert werden können.

Die EP 1 354 664 A1 beschreibt eine Einrichtung zur Überwachung eines optischen Elements, insbesondere eines Schutzglases eines Bearbeitungskopfes zur Bearbeitung eines Werkstücks, welche eine separate Lichtquelle zur Einkopplung eines Lichtstrahls in das optische Element an einer dem Werkstück abgewandten Optikoberfläche und einen Detektor zur Erfassung eines im Bereich der dem Werkstück zugewandten Optikoberfläche reflektierten Lichtstrahls aufweist. Der Lichtstrahl wird hierbei an der dem Werkstück zugewandten Optikoberfläche an Verschmutzungen, beispielsweise an Schmauch oder an Spritzern, reflektiert.

Die EP 1488 882 A1 beschreibt ebenfalls eine Einrichtung zur Überwachung eines optischen Elements, insbesondere eines Schutzglases, bei der die Überwachung mit Hilfe der Erfassung von Streulicht an dem optischen Element und der Erfassung von Streulicht an einem zusätzlichen optischen Element als Referenz erfolgt. Zusätzlich ist eine Erfassung des Streulichts im Zwischenraum zwischen dem ersten und dem zweiten optischen Element vorgesehen, um den Verschmutzungsgrad sowie die Verschmutzungsart (Spritzer oder Schmauch) zu bestimmen.

Zur Überwachung des Verschmutzungsgrades eines Schutzglases ist es aus der DE 299 03 385 U1 bekannt, einen seitlich am Schutzglas angeordneten Sensor zu verwenden, der für die Laserstrahlung selbst unempfindlich ist, aber eine Empfindlichkeit für Infrarot-Wärmestrahlung aufweist, die von Schmutzpartikeln an dem Schutzglas ausgesandt wird.

Die DE 10 2007 030 398 A1 beschreibt eine Vorrichtung und ein Verfahren zur Überwachung der Temperatur und/oder einer temperaturabhängigen Kenngröße eines optischen Elements, bei denen Messstrahlung auf das optische Element ausgesandt wird, zumindest ein Teil der durch das optische Element hindurch getretenen Messstrahlung detektiert wird und die Temperatur bzw. die temperaturabhängige Kenngröße anhand einer vorgegebenen Beziehung zur Intensität der detektierten Messstrahlung überwacht wird.

Aus der EP 1 643 281 A1 ist ein optisches Element zum Einbau in eine Halterung bekannt geworden, welches an seiner Umfangsfläche mindestens eine Profilierung (z.B. eine Kerbe) aufweist. Die Halterung kann einen gefedert gelagerten Klemmkörper mit einer Druckfläche zum Aufbringen von Druck in radialer Richtung auf die Profilierung aufweisen, welcher einen Temperatursensor zur Temperaturmessung des optischen Elements umfasst.

Aus der DE 20 2008 010 495 U1. sind ein optisches Element und eine Vorrichtung zur Überwachung des optischen Elements bekannt geworden. Das optische Element weist einen Strahlung transmittierenden Grundkörper auf, der an einer Umfangsfläche mindestens eine Planfläche aufweist, wobei die Planfläche mit einem für Messstrahlung transmissiven plattenförmigen Körper verbunden ist, und wobei die dem Grundkörper abgewandte Fläche des plattenförmigen Körpers eine für die Messstrahlung spiegelnde oder entspiegelnde Beschichtung aufweist.

Die Überwachung des optischen Elements soll bei den oben beschriebenen Druckschriften unter anderem dazu dienen, Temperaturveränderungen während des Betriebs des optischen Elements zu detektieren, welche sich auf dessen optische Eigenschaften auswirken. Insbesondere soll auf diese Weise eine Verschiebung der Fokuslage (Fokusdrift) erkannt werden.

Die JP 20000094173 beschreibt eine Einrichtung zur Regelung der Fokusposition eines Laserstrahls, welche durch die Erwärmung einer Fokussierlinse hervorgerufene Fluktuationen der Fokusposition ("hot lens effect") kompensiert, indem die Fokussierlinse in Axialrichtung geeignet verschoben wird. An der Fokussierlinse ist seitlich ein Temperatursensor angeordnet, der es ermöglichen soll, die Temperatur der Fokussierlinse in Echtzeit zu messen.

Aus der JP 7051875 A ist es bekannt, eine Einrichtung zur Detektion eines Laserstrahldurchmessers im Strahlengang nach einer Fokussierlinse eines Laserbearbeitungskopfes anzuordnen. Anhand des detektierten Durchmessers soll mittels einer Einrichtung zur automatischen Fokuslageneinstellung ein Abstand zwischen der Fokussierlinse und einem Werkstück optimal eingestellt werden.

Aus der DE 196 30 607 C1 ist eine Vorrichtung zum Überwachen der Energie eines Laserstrahls bekannt geworden, bei der ein Laserstrahl durch ein Fenster in eine Kammer gerichtet wird, um ein Substrat zu bestrahlen. Durch Schrägstellung des Fensters in Bezug auf die Achse des Laserstrahls wird ein Strahlteil aus dem Laserstrahl ausgekoppelt und auf einen Detektor gerichtet.

Aus der DE 10 2007 039 878 A1 sind eine Vorrichtung und ein Verfahren zur Fokuslagen-Stabilisierung bei Optiken für Hochleistungs-Laserstrahlung bekannt geworden, bei denen der Fokus mittels beweglicher optischer Elemente und einer Steuerung bei Auftreten einer Laserstrahl-induzierten Fokuslagen-Änderung in entgegengesetzter Richtung verschoben wird, so dass der Fokus in Summe in der Soll-Lage verbleibt. Die für die Korrektur erforderliche Information kann über die momentane Leistung des Laserstrahls berechnet werden. Um diese zu messen, kann im Strahlengang der Optik eine planparallele Platte unter einem Winkel zur optischen Achse angeordnet werden, an der ein kleiner konstanter Bruchteil des Laserstrahls auf einen optischen Sensor umgelenkt wird.

### Aufgabe der Erfindung

Es ist die Aufgabe der vorliegenden Erfindung, eine Vorrichtung zur Fokussierung eines Laserstrahls auf ein Werkstück sowie ein Verfahren zur Überwachung einer Laserbearbeitung zu verbessern.

### Gegenatand der Erfindung

Gemäß einem ersten Aspekt wird die Erfindung durch eine Vorrichtung gemäß dem Anspruch 1 definiert.

Es wird vorgeschlagen, ein transmissives optisches Element im Strahlengang des Laserstrahls nicht wie sonst üblich mit seiner optischen Achse in einer Ebene senkrecht zur Strahlachse anzuordnen, sondern das optische Element gegenüber dieser Ebene zu verkippen. Bei dem optischen Element kann es sich im einfachsten Fall um ein optisches Element ohne Brechkraft, z.B. eine Planplatte, insbesondere in Form eines Schutzglases, handeln. Eine Verkippung des optischen Elements hat in diesem Fall (bei geringer Plattendicke) auf den Strahlengang des von dem optischen Element transmittierten Laserstrahls keine bzw. nur äußerst geringe Auswirkungen.

Es versteht sich, dass auch andere optische Elemente unter einem Kippwinkel geneigt angeordnet werden können, um Laserstrahlung zur Strahlanalyse bzw. zur Überwachung der Laserbearbeitung in einen Bereich neben den Strahlengang des Laserstrahls auszukoppeln. Unter einer Verkippung wird im Sinne dieser Anmeldung verstanden, dass gemäß den Erfindung sowohl eine Eintrittsfläche als auch eine Austrittsfläche des optischen Elements bezüglich der Ebene senkrecht zur Strahlachse geneigt sind. Dies ist erforderlich, damit die Laserstrahlung nicht in den Strahlengang des Laserstrahls zurück reflektiert wird.

Durch die Verkippung des optischen Elements kann die zurückreflektierte Laserstrahlung direkt mit Hilfe eines neben dem Strahlengang des Laserstrahls angeordneten ortsauflösenden Detektors erfasst werden. Auf ein zusätzliches Auskoppelelement in Form eines Strahlteilers - wie beispielsweise in der DE 10 2007 053 632 A1 beschrieben - kann hierbei verzichtet werden, da die Rückreflexion nicht (nahezu) koaxial zum Laserstrahl verläuft.

In einer vorteilhaften Ausführungsform umfassen die Mittel eine Bildauswerteeinrichtung, die mit dem Detektor gekoppelt ist. Die an den beiden optischen Flächen reflektierte Laserstrahlung trifft aufgrund der Schrägstellung des optischen Elements an unterschiedlichen Orten bzw. Auftreffbereichen auf den Detektor auf. Da die räumliche Separation der Auftreffbereiche wegen der typischer Weise geringen Dicke des optischen Elements bzw. des verhältnismäßig kleinen Kippwinkels gering ist, so dass sich die Auftreffbereiche ggf. überlappen, kann eine Bildauswerteeinrichtung zur Bestimmung der Größe des Auftreffbereichs der von der jeweiligen Seite reflektierten Laserstrahlung genutzt werden.

Bei einer weiteren Ausführungsform umfassen die Mittel eine Blende zum Ausblenden der von einer der Seiten rückreflektierten Laserstrahlung. Auch durch eine (Loch-)Blende kann die von einer der beiden Seiten rückreflektierte Laserstrahlung ausgeblendet werden, so dass vom Detektor nur die von der anderen Seite des optischen Elements zurück reflektierte Laserstrahlung detektiert wird. Es versteht sich, dass die Loch-Blende auch verschoben werden kann, um wahlweise die von der einen oder von der anderen Seite des optischen Elements zurückreflektierte Laserstrahlung auszublenden.

Bei einer weiteren Ausführungsform ist der ortsauflösende Detektor, der über einzelne Detektoren, insbesondere über einen CCD-Chip darstellbar ist, bezüglich der Ebene senkrecht zur Strahlachse der reflektierten Strahlung unter dem Kippwinkel angeordnet. Die Verkippung des Detektors bzw. der Detektorfläche führt insbesondere bei einer Planplatte als optischem Element dazu, dass der Strahlweg von an einer eintrittsseitigen optischen Fläche reflektierter Laserstrahlung und der Strahlweg von an einer austrittsseitigen optischen Fläche reflektierter Laserstrahlung zum Detektor gleich groß ist.

Dies ist insbesondere deshalb günstig, da in diesem Fall die gemessenen Intensitäten bzw. der Oberflächenbereich, in dem die von den unterschiedlichen Seiten des optischen Elements reflektierte Laserstrahlung auftrifft, wegen des identischen Abstands in Strahlausbreitungsrichtung im Idealfall gleich groß ist. Hierdurch sind dann insbesondere auch die Unterschiede der gemessenen Intensitäten bzw. die Größen der Oberflächenbereiche direkt vergleichbar und damit auswertbar.

In einer Ausführungsform ist das transmissive optische Element im konvergenten Strahlengang des Laserstrahls angeordnet, insbesondere nach der letzten Fokussierlinse. Auf diese Weise können die Einflüsse aller im Strahlengang vor dem transmissiven optischen Element vorhandenen Optikkomponenten bei der Überwachung berücksichtigt werden.

In einer weiteren Ausführungsform umfasst die Vorrichtung ein im Strahlengang des Laserstrahls vor dem optischen Element angeordnetes strahlformendes optisches Element, insbesondere eine Fokussierlinse, zur Fokussierung des Laserstrahls auf das Werkstück. Das transmissive optische Element kann in diesem Fall im konvergenten Strahlengang nach der Fokussierlinse angeordnet werden, so dass der Kippwinkel, welcher benötigt wird, um die zurück reflektierte Laserstrahlung aus dem Strahlengang des (Haupt-)strahls auszukoppeln, so dass diese nicht wieder auf die Fokussierlinse trifft, vergleichsweise klein gewählt werden kann.

Beispielsweise kann der Kippwinkel hierbei zwischen 5° und 25°, bevorzugt zwischen 10° und 20° liegen, wobei die genaue Wahl des Kippwinkels unter anderem von der Brennweite der Fokussierlinse und dem Abstand zwischen dem optischen Element und der Fokussierlinse abhängt. Die Reflexion der Laserstrahlung erfolgt hierbei typischer Weise an einer Antireflex-Beschichtung des optischen Elements, welche an beiden einander gegenüberliegenden optischen Flächen des optischen Elements aufgebracht ist, so dass an beiden Flächen nur ein geringer Anteil von z.B. ca. 0,2 % der Laserleistung reflektiert wird.

In einer weiteren Ausführungsform ist der Detektor in einem Abstand zur Fokussierlinse angeordnet, welcher der Brennweite der Fokussierlinse entspricht. Dies ist günstig, da (im Idealfall, d.h. ohne temperaturbedingte Veränderungen der optischen Eigenschaften der Fokussierlinse) die ausgekoppelte Laserstrahlung genau auf der Detektorfläche fokussiert wird. Auch bei geringen Schwankungen der Fokuslage um diese Nulllage herum trifft die zurückreflektierte Laserstrahlung weiterhin stark lokalisiert auf den Detektor.

In einer Ausführungsform umfasst die Vorrichtung einen Faltungsspiegel zur Umlenkung der reflektierten Laserstrahlung auf den Detektor. Der Faltungsspiegel ermöglicht es, den Detektor in der Nähe des Strahlengangs des Laserstrahls bzw. des transmissiven optischen Elements anzuordnen und somit Bauraum zu sparen.

In einer Weiterbildung ist die Vorrichtung ausgebildet, anhand der an einer ersten Seite des optischen Elements rückreflektierten Laserstrahlung und anhand deran einer zweiten Seite des optischen Elements rückreflektierten Laserstrahlung den Verschmutzungszustand des optischen Elements zu bestimmen. Wie oben dargestellt wurde, werden die an beiden Seiten rückreflektierten Strahlanteile der Laserstrahlung ortsaufgelöst abgebildet und können daher voneinander unterschieden werden, wobei anhand der Größe des jeweiligen Auftreffbereichs auf die momentane Fokuslage geschlossen werden kann, d.h. die Größe des jeweiligen Auftreffbereichs variiert in Abhängigkeit von der Fokuslage.

Die an der ersten, der Fokussierlinse zugewandten Fläche zurückreflektierte Laserstrahlung beinhaltet hierbei die thermischen Einflüsse auf die Fokuslage aller Optiken vor dem Fenster. Die an der zweiten, der Fokussierlinse abgewandten Fläche zurück reflektierte Laserstrahlung erfährt die thermischen Einflüsse wie eine Fokusverschiebung aufgrund des Materials und des Zustands, beispielsweise infolge Verschmutzung, des optischen Elements, z.B. des Schutzglas-Fensters. Daher ist die Differenz der beiden Fokuslagen bzw. die Differenz der Größe der Auftreffbereiche der Laserstrahlung ein Maß für den thermischen Einfluss des optischen Elements und vergrößert sich typischer Weise bei steigender Verschmutzung. Es versteht sich, dass die Informationen über die Bedingungen oberhalb des optischen Elements sowie die Anteile, die durch eine Verschmutzung des optischen Elements hinzukommen, je nach Zielsetzung der Prozessüberwachung geeignet ausgewertet werden können.

In einer Ausführungsform ist die Vorrichtung zur Bestimmung der Fokusposition des Laserstrahls anhand der vom Detektor erfassten Laserstrahlung ausgebildet. Zu diesem Zweck wird die Größe des bzw. der Auftreffbereiche der zurückreflektierten Laserstrahlung auf dem Detektor ermittelt. Da der Abstand zwischen der Detektorfläche und der Fokussierlinse sowie die Brennweite der Fokussierlinse bekannt ist, kann anhand der Größe eines jeweiligen Auftreffbereichs auf dem Detektor (näherungsweise) bestimmt werden, wie weit der Fokuspunkt von der Kollimationslinse entfernt ist und ob dieser den gewünschten Abstand zum Werkstück aufweist.

In einer Weiterbildung umfasst die Vorrichtung eine Einrichtung zur Veränderung der Fokusposition des Laserstrahls in Strahlrichtung sowie eine Steuerungseinrichtung, welche ausgelegt ist, die Einrichtung zur Veränderung der Fokusposition anzusteuern, um die Fokusposition auf eine Soll-Fokusposition zu regeln. Bei der Einrichtung zur Veränderung der Fokusposition kann es sich z.B. um einen (Linear-)antrieb zur Verschiebung der Fokussierlinse in Axial- bzw. in Strahlausbreitungsrichtung handeln. Es versteht sich, dass auch im Strahlengang vor der Fokussierlinse angeordnete optische Elemente mittels einer solchen Einrichtung beeinflusst werden können, um die Fokuslage in Strahlrichtung zu verändern. Beispielsweise kann bei der Verwendung eines Linsensystems für die Fokussierung eine weitere Linse, die der Fokussierlinse in Strahlausbreitungsrichtung vorgelagert ist, zur Veränderung der Fokusposition dienen. Auch kann zu diesem Zweck die Krümmung eines im Strahlengang vor der Linse angeordneten adaptiven Spiegels geeignet eingestellt werden. Die Veränderung der Fokuslage zieht eine Veränderung der Größe des Auftreffbereichs der zurückreflektierten Laserstrahlung auf dem Detektor nach sich. Die Steuerungseinrichtung kann die Einrichtung zur Veränderung der Fokusposition hierbei derart ansteuern bzw. regeln, dass die Größe des Auftreffbereichs während des Laserbearbeitungsprozesses konstant bleibt.

Ist der Detektor in einem Abstand zur Fokussierlinse angeordnet, welcher deren (nominellen) Brennweite entspricht und ist die Oberseite des Werkstücks im Abstand der Brennweite angeordnet, kann die Steuerungseinrichtung den Durchmesser des Auftreffbereichs beispielsweise so regeln, dass dieser stets minimal ist. Es versteht sich, dass bei manchen Anwendungen die Fokuslage nicht an der Oberseite des Werkstücks liegen soll. In diesem Fall kann zunächst ausgehend von der gemessenen Null-Lage (minimaler Durchmesser) die Fokusposition wie gewünscht verändert werden und die sich nach der Veränderung einstellende Größe des Auftreffbereichs der reflektierten Laserstrahlung konstant gehalten werden.

Ein weiterer Aspekt der Erfindung betrifft ein Verfahren zum Überwachen einer Laserbearbeitung gemäß Anspruch 16.

In einer Variante umfasst das Verfahren: Bestimmen der Fokusposition des Laserstrahls in Strahlrichtung und/oder eines Verschmutzungszustands des im konvergenten Strahlengang des Laserstrahls angeordneten transmissiven optischen Elements anhand der detektierten Laserstrahlung. Die Fokusposition bzw. die Verschmutzung des optischen Elements können hierbei auf die weiter oben im Zusammenhang mit der Vorrichtung beschriebene Weise bestimmt werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Ausführungsform einer erfindungsgemäßen Vorrichtung zur Strahlführung eines Laserstrahls in Form eines Laserbearbeitungskopfes, sowie
- Fign. 2a,b: schematische Darstellungen einer Detektorfläche der Vorrichtung von Fig. 1 ohne bzw. mit einer Lochblende.

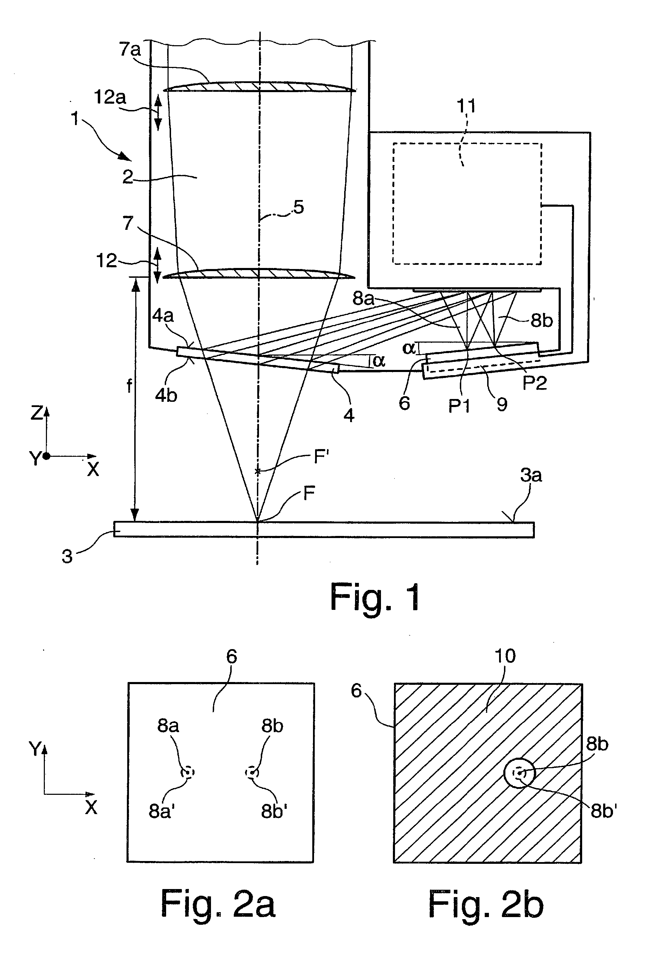

**Fig. 1** zeigt eine Vorrichtung zur Fokussierung eines Laserstrahls 2 auf ein Werkstück 3, welche in Form eines Laserbearbeitungskopfs 1 ausgebildet ist, der Teil einer (nicht gezeigten) Laserbearbeitungsmaschine ist. Der Laserstrahl 2 wird hierbei von einem Laser, z.B. einem Nd:YAG-Laser erzeugt, welcher über weitere (nicht gezeigte) optische Einrichtungen, die der Strahlführung des Laserstrahls dienen, zum Laserbearbeitungskopf 1 geführt wird.

Der Laserbearbeitungskopf 1 weist ein transmissives optisches Element 4 in Form eines Schutzglases (dünne Planplatte) auf, das bezüglich einer Ebene X, Y, die senkrecht zur Strahlachse 5 des Laserstrahls 2 (in Z-Richtung) verläuft, unter einem Kippwinkel α angeordnet ist. Das Schutzglas 4 dient dem Schutz der im Inneren des Laserbearbeitungskopfs 1 angeordneten optischen Komponenten vor Verschmutzungen, z.B. vor Schmauch oder Spritzern, die bei der Bearbeitung des Werkstücks 3 mittels des Laserstrahls 2 entstehen können. Im Strahlengang vor dem Schutzglas 4 ist in dem Laserbearbeitungskopf 1 eine Fokussierlinse 7 angeordnet, welche der Fokussierung des Laserstrahls 2 auf das Werkstück 3, genauer gesagt auf dessen Oberseite 3a dient. Der Abstand der Fokussierlinse 7 von der Oberseite 3a des Werkstücks 3 entspricht hierbei der Brennweite f der Fokussierlinse 7, so dass eine Fokusposition F des Laserstrahls 2 in Strahlrichtung 5 sich an der Oberseite 3a des Werkstücks 3 befindet. Um den Abstand zwischen dem Laserbearbeitungskopf 1 und dem Werkstück 3 einzustellen, kann eine (nicht gezeigte) Abstandsregelung, z.B. eine kapazitive Abstandsregelung genutzt werden.

Der Laserstrahl 2 durchläuft hierbei das transmissive Schutzglas 4 praktisch ohne Ablenkung bzw. ohne Strahlversatz, d.h. die Fokussierlinse 7 bildet das letzte strahlformende optische Element des Laserbearbeitungskopfes 1. Sowohl an der der Fokussierlinse 7 zugewandten Oberseite 4a des Schutzglases 4 als auch an der der Fokussierlinse 7 abgewandten Unterseite 4b des Schutzglases 4 wird trotz einer an den jeweiligen Seiten 4a, 4b aufgebrachten (nicht gezeigten) Antireflex-Beschichtung ein geringer Anteil der Laserstrahlung (ca. 0,2 %) reflektiert. Diese an dem Schutzglas 4 zurück reflektierte Laserstrahlung 8a, 8b wird über einen Faltungsspiegel 13 umgelenkt und trifft auf einen ortsauflösenden Detektor 6 (z.B. einen CCD-Chip), welcher ebenfalls unter dem Kippwinkel α zur XY-Ebene geneigt ist (aber gegenläufig zum Schutzglas 4).

Der Kippwinkel α beträgt im vorliegenden Beispiel ca. 15° und wird generell in Abhängigkeit von der Brennweite f der Fokussierlinse 7 sowie vom Abstand des Schutzglases 4 von der Fokussierlinse 7 so groß gewählt, dass die zurückreflektierte Laserstrahlung 8a, 8b aus dem Strahlengang des Laserstrahls 2 ausgekoppelt wird, d.h. nicht auf die Fokussierlinse 7 trifft, sondern von einem benachbart zum Laserstrahl 2 angeordneten Detektor 6 erfasst werden kann. Typische Werte für den Kippwinkel α liegen zwischen 5° und 25°, günstige Werte zwischen 10° und 20°.

Wie in Fig. 1 zu erkennen ist, trifft von der Oberseite 4a des Schutzglases 4 zurück reflektierte Laserstrahlung 8a an einem ersten Punkt P1 auf den Detektor 6, während von der Unterseite 4b des Schutzglases 4 reflektierte Laserstrahlung 8b an einem zweiten Punkt P2 auf dem Detektor 6 trifft, d.h. die Verkippung des Schutzglases 4 führt zu einem Versatz der von der jeweiligen Seite 4a, 4b des Schutzglases 4 reflektierten Laserstrahlung 8a, 8b auf dem Detektor 6.

Anhand der Größe bzw. des Durchmessers der Laserstrahlung 8a, 8b auf dem Detektor 6, d.h. der Größe des jeweiligen Auftreffbereichs, kann die Fokusposition des Laserstrahls 2 bestimmt werden, da die Größe des Auftreffbereichs von der Fokusposition abhängig ist. So ist beispielsweise bei der in Fig. 1 gezeigten Einstellung, bei welcher sich die Fokusposition F an der Oberfläche 3a des Werkstücks 3 befindet, die Größe der Auftreffbereiche der Laserstrahlung 8a, 8b auf dem Detektor 6 minimal, d.h. quasi punktförmig, vgl. Fig. 2a. Wird die Fokussierlinse 7 hingegen mit Hilfe einer Verschiebeeinrichtung 12 in Form eines in Fig. 1 durch einen Doppelpfeil angedeuteten Linearmotors in Strahlrichtung 5 nach oben, d.h. vom Werkstück 3 weg verschoben, so wird der Fokus entsprechend in eine vom Werkstück 3 beabstandete Fokusposition F' verschoben. Alternativ oder zusätzlich kann zur Verschiebung des Fokus auch eine in Strahlausbreitungsrichtung vor der Fokussierlinse 7 angeordnete weitere Linse 7a mittels einer entsprechenden Verschiebeeinrichtung 12a (Linearmotor) in Strahlrichtung verschoben werden. Hierbei erhöht sich der Durchmesser der Auftreffbereiche der Laserstrahlung 8a', 8b' auf dem Detektor 6 gegenüber den quasi punktförmigen Auftreffbereichen, wie in Fig. 2a ebenfalls zu erkennen ist.

Einem jeweiligen Durchmesser der detektierten Laserstrahlung 8a, 8b bzw. 8a', 8b' auf dem Detektor 6 kann somit eine Fokusposition F, F' zugeordnet werden, beispielsweise indem zuvor die Strahlkaustik des Laserstrahls bestimmt wird. Hierbei wird günstiger Weise zunächst durch Variation der Fokuslage diejenige Fokusposition F als Nulllage bestimmt wird, in welcher die Größe der Auftreffbereiche der Laserstrahlung minimal ist (d.h. vorliegenden Beispiel, wenn die Fokusposition F der (nominellen) Brennweite der Fokussierlinse 7 entspricht).

Um den Laserstrahlfokus auf eine gewünschte Soll-Fokusposition zu regeln, kann eine Steuerungseinrichtung 11 die Verschiebeeinrichtung 12 bzw. 12a in Abhängigkeit von einem Signal, welches von einer mit dem Detektor 6 in Verbindung stehenden Bildauswerteeinrichtung 9 geliefert wird, geeignet ansteuern, und zwar derart, das die Größe eines jeweiligen Auftreffbereichs der Laserstrahlung 8a, 8b auf dem Detektor 6 und somit die Fokuslage F bzw. F' konstant gehalten wird. Auf diese Weise können ungewollte Veränderungen der Fokuslage aufgrund einer thermischen Belastung der optischen Elemente des Laserbearbeitungskopfs 1 wie z.B. der Fokussierlinse 7 ausgeglichen werden.

Wie oben dargestellt wurde, trifft die von unterschiedlichen Seiten 4a, 4b des Schutzglases 4 zurückreflektierte Laserstrahlung 8a, 8b an unterschiedlichen Orten bzw. in unterschiedlichen Auftreffbereichen auf dem Detektor 6 auf, so dass es möglich ist, mit Hilfe einer Bildauswerteeinrichtung 9, die mit dem Detektor 6 gekoppelt ist, die detektierte Laserstrahlung 8a, 8b der jeweiligen Seite 4a, 4b des Schutzglases 4 zuzuordnen.

Bei dem in Fig. 2a gezeigten Beispiel ist das Schutzglas 4 nicht bzw. nur geringfügig verschmutzt und die Größen der Auftreffbereiche bzw. der auftreffenden Laserstrahlung 8a', 8b' stimmen überein, so dass die Fokuslage, die mittels der von der Oberseite 4a des Schutzglases 4 reflektierten Laserstrahlung 8a' ermittelt wird, mit der Fokuslage übereinstimmt, die mittels der von der Unterseite 4b des Schutzglases 4 reflektierten Laserstrahlung 8b' ermittelt wird.

Während bei dem in Fig. 2a dargestellten Beispiel die von der jeweiligen Seite 4a, 4b zurück reflektierte Laserstrahlung 8a', 8b' auf dem Detektor 6 deutlich voneinander separiert ist, trifft dies im Allgemeinen nicht zu, d.h. die jeweiligen Anteile überlappen sich auf dem Detektor 6 bzw. der Detektoroberfläche, so dass die Bildauswerteeinrichtung 9 benötigt wird, um eine Zuordnung der jeweiligen Anteile vorzunehmen. Alternativ kann auch eine in **Fig. 2b** dargestellte Lochblende 10, die zwischen dem Faltungsspiegel 13 und dem Detektor 6 angeordnet ist, verwendet werden, um die an der Oberseite 4a des Schutzglases 4 reflektierte Laserstrahlung 8a, 8a' auszublenden und nur die an der Unterseite 4b reflektierte Laserstrahlung 8b, 8b' zu detektieren. Es versteht sich, dass bei entsprechender Verschiebung der Lochblende 10 die Rollen der Oberseite 4a und der Unterseite 4b des Schutzglases 4 vertauscht werden können, d.h. es kann die von der Unterseite 4b reflektierte Laserstrahlung 8b, 8b' ausgeblendet werden.

Anders als in Fig. 2a gezeigt können die Durchmesser der von den beiden Seiten 4a, 4b des Schutzglases 4 zurückreflektierten Laserstrahlung 8a', 8b' voneinander abweichen. Dies erklärt sich dadurch, dass die Laserstrahlung 8a, welche an der Oberseite 4a des Schutzglases 4 reflektiert wird, lediglich die thermischen Einflüsse auf die Fokuslage aller Optiken vor dem Schutzglas 4 berücksichtigt. Die von der Unterseite 4b reflektierte Laserstrahlung 8b erfährt hingegen zusätzlich die thermischen Einflüsse des Schutzglases 4, d.h. eine Fokusverschiebung aufgrund der Erwärmung des Schutzglas-Materials, z.B. aufgrund von Schmutzablagerungen. Daher ist die Differenz der beiden Fokuslagen, die anhand der an einer jeweiligen Seite 4a, 4b des Schutzglases 4 reflektierten Laserstrahlung 8a, 8b bestimmt werden, ein Maß für den thermischen Einfluss des Schutzglases 4, welcher sich bei steigender Verschmutzung vergrößert. Anhand eines Vergleichs zwischen den Größen der von der jeweiligen Fläche 4a, 4b reflektierten Laserstrahlung 8a, 8b auf dem Detektor 6 kann somit die Verschmutzung des Schutzglases 4 überwacht werden.

Zusammenfassend kann auf die oben beschriebene Weise eine Überwachung einer Laserbearbeitung an einem Werkstück vorgenommen werden, bei der sowohl die Fokuslage des Laserstrahls in Ausbreitungsrichtung als auch der Verschmutzungsgrad des Schutzglases oder ggf. eines anderen optischen Elements auf besonders einfache Weise bestimmt werden können.

## Patentansprüche

1. Vorrichtung zur Fokussierung eines Laserstrahls (2) auf ein Werkstück (3), umfassend:
mindestens ein transmissives optisches Element (4), welches bezüglich einer Ebene (X, Y) senkrecht zur Strahlachse (5) des Laserstrahls (2) unter einem Kippwinkel (α) angeordnet ist, wobei das transmissive optische Element (4) eine erste Seite (4a) und eine zweite Seite (4b) aufweist, die von dem Laserstrahl (2) durchlaufen werden, sowie
einen ortsauflösenden Detektor (6) zur Erfassung von an dem transmissiven optischen Element (4) rückreflektierter Laserstrahlung (8a, 8b; 8a', 8b'),
**dadurch gekennzeichnet,**
**dass** die Vorrichtung Mittel (9, 10) zur Unterscheidung von an der ersten Seite (4a) des optischen Elements (4) rückreflektierter Laserstrahlung (8a, 8a') von an der zweiten Seite (4b) des optischen Elements (4) rückreflektierter Laserstrahlung (8b, 8b') aufweist.

2. Vorrichtung nach Anspruch 1, bei welcher die Mittel eine Bildauswerteeinrichtung (9) umfassen, die mit dem Detektor (6) gekoppelt ist.

3. Vorrichtung nach Anspruch 1 oder 2, bei welcher die Mittel eine Blende (10) zum Ausblenden der von einer der Seiten (4a) rückreflektierten Laserstrahlung (8a, 8b) umfassen.

4. Vorrichtung nach Anspruch 3, bei welcher die Blende (10) zum wahlweisen Ausblenden der von der ersten Seite (4a) oder von der zweiten Seite (4b) des optischen Elements (2) zurückreflektierten Laserstrahlung (8a, 8a') verschiebbar ist.

5. Vorrichtung nach einem der vorhergehenden Ansprüche, bei welcher der ortsauflösende Detektor (6) bezüglich der Ebene (X, Y) senkrecht zur Strahlachse (5) unter dem Kippwinkel (α) angeordnet ist.

6. Vorrichtung nach einem der vorhergehenden Ansprüche, bei welcher das transmissive optische Element (4) im konvergenten Strahlengang des Laserstrahls (2) angeordnet ist.

7. Vorrichtung nach einem der vorhergehenden Ansprüche, weiter umfassend: ein im Strahlengang des Laserstrahls (2) vor dem optischen Element (4) angeordnetes strahlformendes Element, insbesondere eine Fokussierlinse (7), zur Fokussierung des Laserstrahls (2) auf das Werkstück (3).

8. Vorrichtung nach einem der vorhergehenden Ansprüche, bei welcher der Kippwinkel (α) zwischen 5° und 25° beträgt.

9. Vorrichtung nach Anspruch 7 oder 8, bei welcher der Detektor (6) in einem Abstand zur Fokussierlinse (7) angeordnet ist, welcher der Brennweite (f) der Fokussierlinse (7) entspricht.

10. Vorrichtung nach einem der vorhergehenden Ansprüche, weiter umfassend:
einen Faltungsspiegel (13) zur Umlenkung der reflektierten Laserstrahlung (8a, 8b; 8a', 8b') auf den Detektor (6).

11. Vorrichtung nach einem der vorhergehenden Ansprüche, welche ausgebildet ist, anhand der an einer ersten Seite (4a) des optischen Elements (4) rückreflektierten Laserstrahlung (8a, 8a') und anhand der an einer zweiten Seite (4b) des optischen Elements (4) rückreflektierten Laserstrahlung (8b, 8b') den Verschmutzungszustand des optischen Elements (4) zu bestimmen.

12. Vorrichtung nach einem der vorhergehenden Ansprüche, welche zur Bestimmung einer Fokusposition (F, F') des Laserstrahls (2) anhand der vom Detektor (6) erfassten Laserstrahlung (8a, 8b; 8a', 8b') ausgebildet ist.

13. Vorrichtung nach Anspruch 12, weiter umfassend:
eine Einrichtung (12) zur Veränderung der Fokusposition (F, F') des Laserstrahls (2) in Strahlrichtung (5), sowie eine Steuerungseinrichtung (11), welche ausgelegt ist, die Einrichtung (12) zur Veränderung der Fokusposition (F, F') anzusteuern, um die Fokusposition (F') auf eine Soll-Fokusposition (F) zu regeln.

14. Vorrichtung nach einem der vorhergehenden Ansprüche, bei welcher das transmissive optische Element (2) eine Planplatte ist.

15. Vorrichtung nach einem der vorhergehenden Ansprüche, bei der sowohl auf die erste Seite (4a) als auch auf die zweite Seite (4b) des optischen Elements (2) eine Antireflex-Beschichtung aufgebracht ist.

16. Verfahren zum Überwachen einer Laserbearbeitung mittels eines fokussierten Laserstrahls (2), umfassend:
Detektieren von Laserstrahlung (8a, 8b; 8a', 8b'), welche von einem bezüglich einer Ebene (X, Y) senkrecht zur Strahlachse (5) des Laserstrahls (2) unter einem Kippwinkel (α) angeordneten transmissiven optischen Element (4) zurückreflektiert wird, wobei das transmissive optische Element (4) eine erste Seite (4a) und eine zweite Seite (4b) aufweist, die von dem Laserstrahl (2) durchlaufen werden,
**dadurch gekennzeichnet,**
**dass** an der ersten Seite (4a) des optischen Elements (4) rückreflektierte Laserstrahlung (8a, 8a') beim Detektieren von an der zweiten Seite (4b) des optischen Elements (4) rückreflektierter Laserstrahlung (8b, 8b') unterschieden wird.

17. Verfahren nach Anspruch 16, weiter umfassend:
Bestimmen der Fokusposition (F, F') des Laserstrahls (2) in Strahlrichtung (5) und/oder eines Verschmutzungszustands des transmissiven optischen Elements (4) anhand der detektierten Laserstrahlung (8a, 8b; 8a', 8b').

## Claims

1. Apparatus for focusing a laser beam (2) on a workpiece (3), comprising:
at least one transmissive optical element (4) which is arranged at a tilting angle (α) with respect to a plane (X, Y) perpendicular relative to the beam axis (5) of the laser beam (2), and
a spatially resolving detector (6) for detecting laser radiation (8a, 8b; 8a', 8b') reflected back from the transmissive optical element (4), wherein the transmissive optical element (4) has a first side (4a) and a second side (4b) which are passed through by the laser beam (2)
**characterised in that**
the apparatus has means (9, 10) for distinguishing laser radiation (8a, 8a') reflected back at the first side (4a) of the optical element (4) from laser radiation (8b, 8b') reflected back at the second side (4b) of the optical element (4).

2. Apparatus according to claim 1, wherein the means comprise an image evaluation device (9) which is coupled to the detector (6).

3. Apparatus according to claim 1 or claim 2, wherein the means comprise an aperture(10) for suppressing the laser radiation (8a, 8b) reflected back from one of the sides (4a).

4. Apparatus according to claim 3, wherein the aperture (10) is displaceable for selectively suppressing the laser radiation (8a, 8a') reflected back from the first side (4a) or from the second side (4b) of the optical element (2).

5. Apparatus according to any one of the preceding claims, wherein the spatially resolving detector (6) is arranged at the tilting angle (α) with respect to the plane (X, Y) perpendicular relative to the beam axis (5).

6. Apparatus according to any one of the preceding claims, wherein the transmissive optical element (4) is arranged in the convergent beam path of the laser beam (2).

7. Apparatus according to any one of the preceding claims, further comprising: a beam-shaping element which is arranged in the beam path of the laser beam (2) upstream of the optical element (4), in particular a focusing lens (7), for focusing the laser beam (2) onto the workpiece (3).

8. Apparatus according to any one of the preceding claims, wherein the tilting angle (α) is between 5° and 25°.

9. Apparatus according to claim 7 or 8, wherein the detector (6) is arranged at a distance from the focusing lens (7) which corresponds to the focal length (f) of the focusing lens (7).

10. Apparatus according to any one of the preceding claims, further comprising: a folding mirror (13) for redirecting the reflected laser radiation (8a, 8b; 8a', 8b') onto the detector (6).

11. Apparatus according to any one of the preceding claims, which is adapted to determine the contamination state of the optical element (4) based on the laser radiation (8a, 8a') reflected back at a first side (4a) of the optical element (4) and based on the laser radiation (8b, 8b') reflected back at a second side (4b) of the optical element (4).

12. Apparatus according to any one of the preceding claims, which is adapted to determine a focal position (F, F') of the laser beam (2) based on the laser radiation (8a, 8b,; 8a', 8b') detected by the detector (6).

13. Apparatus according to claim 12, further comprising: a device (12) for changing the focal position (F, F') of the laser beam (2) in the beam direction (5) and a control device (11) which is configured to control the device (12) for changing the focal position (F, F') in order to adjust the focal position (F') to a desired focal position (F).

14. Apparatus according to any one of the preceding claims, wherein the transmissive optical element (2) is a planar plate.

15. Apparatus according to any one of the preceding claims, wherein an anti-reflective coating is applied to both the first side (4a) and the second side (4b) of the optical element (2).

16. Method for monitoring a laser processing operation using a focused laser beam (2), comprising:
detecting laser radiation (8a, 8b; 8a', 8b') which is reflected back from a transmissive optical element (4) arranged at a tilting angle (α) with respect to a plane (X, Y) perpendicular relative to the beam axis (5) of the laser beam (2), wherein the transmissive optical element (4) has a first side (4a) and a second side (4b) which are passed through by the laser beam (2)
**characterised in that**
laser radiation (8a, 8a') reflected back at the first side (4a) of the optical element (4) is distinguished during detection from laser radiation (8b, 8b') reflected back at the second side (4b) of the optical element (4).

17. Method according to claim 16, further comprising:
determining the focal position (F, F') of the laser beam (2) in the beam direction (5) and/or a contamination state of the transmissive optical element (4) based on the detected laser radiation (8a, 8b; 8a', 8b').

## Revendications

1. Dispositif de focalisation d'un faisceau laser (2) sur une pièce (3), comprenant :
au moins un élément optique transmissif (4), lequel est disposé selon un angle d'inclinaison (α) par rapport à un plan (X, Y) perpendiculaire à l'axe de faisceau (5) du faisceau laser (2), l'élément optique transmissif (4) présentant une première face (4a) et une deuxième face (4b) qui sont traversées par le faisceau laser (2), ainsi que
un détecteur à résolution spatiale (6) pour détecter le rayonnement laser (8a, 8b ; 8a', 8b') réfléchi sur l'élément optique transmissif (4),
**caractérisé en ce**
**que** le dispositif présente des moyens (9, 10) pour faire une distinction entre le rayonnement laser (8a, 8a') réfléchi sur la première face (4a) de l'élément optique (4) et le rayonnement laser (8b, 8b') réfléchi sur la deuxième face (4b) de l'élément optique (4).

2. Dispositif selon la revendication 1, dans lequel les moyens comprennent un moyen d'évaluation d'image (9) qui est couplé au détecteur (6).

3. Dispositif selon l'une des revendications 1 ou 2, dans lequel les moyens comprennent un obturateur (10) pour masquer le rayonnement laser (8a, 8b) réfléchi par une des faces (4a).

4. Dispositif selon la revendication 3, dans lequel l'obturateur (10) est déplaçable pour masquer au choix le rayonnement laser (8a, 8a') réfléchi par la première face (4a) ou par la deuxième face (4b) de l'élément optique (2).

5. Dispositif selon l'une des revendications précédentes, dans lequel le détecteur à résolution spatiale (6) est disposé selon l'angle d'inclinaison (α) par rapport au plan (X, Y) perpendiculaire à l'axe de faisceau (5).

6. Dispositif selon l'une des revendications précédentes, dans lequel l'élément optique transmissif (4) est disposé dans le trajet optique convergent du faisceau laser (2).

7. Dispositif selon l'une des revendications précédentes, comprenant en outre :
un élément de mise en forme du faisceau disposé avant l'élément optique (4) dans le trajet optique du faisceau laser (2), en particulier une lentille de focalisation (7) pour focaliser le faisceau laser (2) sur la pièce (3).

8. Dispositif selon l'une des revendications précédentes, dans lequel l'angle d'inclinaison (α) est compris entre 5° et 25°.

9. Dispositif selon l'une des revendications 7 ou 8, dans lequel le détecteur (6) est disposé à une distance de la lentille de focalisation (7) qui correspond à la distance focale (f) de la lentille de focalisation (7).

10. Dispositif selon l'une des revendications précédentes, comprenant en outre :
un miroir de repli (13) pour dévier le rayonnement laser réfléchi (8a, 8b ; 8a', 8b') sur le détecteur (6).

11. Dispositif selon l'une des revendications précédentes, lequel est conçu pour déterminer, à partir du rayonnement laser (8a, 8a') réfléchi sur une première face (4a) de l'élément optique (4) et à partir du rayonnement laser (8b, 8b') réfléchi sur une deuxième face (4b) de l'élément optique (4), l'état d'encrassement de l'élément optique (4).

12. Dispositif selon l'une des revendications précédentes, lequel est conçu pour déterminer une position focale (F, F') du faisceau laser (2) à partir du rayonnement laser (8a, 8b ; 8a', 8b') détecté par le détecteur (6).

13. Dispositif selon la revendication 12, comprenant en outre :
un moyen (12) pour modifier la position focale (F, F') du faisceau laser (2) dans la direction du faisceau (5) ainsi qu'un moyen de commande (11), lequel est conçu pour commander le moyen (12) pour modifier la position focale (F, F'), afin de réguler la position focale (F') sur une position focale de consigne (F).

14. Dispositif selon l'une des revendications précédentes, dans lequel l'élément optique transmissif (2) est une lame plane.

15. Dispositif selon l'une des revendications précédentes, dans lequel un revêtement antireflets est appliqué aussi bien sur la première face (4a) que sur la deuxième face (4b) de l'élément optique (2).

16. Procédé de surveillance d'un usinage au laser au moyen d'un faisceau laser focalisé (2), consistant à :
détecter un rayonnement laser (8a, 8b ; 8a', 8b') qui est réfléchi par un élément optique transmissif (4) disposé selon un angle d'inclinaison (α) par rapport à un plan (X, Y) perpendiculaire à l'axe de faisceau (5) du faisceau laser (2), l'élément optique transmissif (4) présentant une première face (4a) et une deuxième face (4b) qui sont traversées par le faisceau laser (2),
**caractérisé en ce**
**que**, lors de la détection, il est fait une distinction entre le rayonnement laser (8a, 8a') réfléchi sur la première face (4a) de l'élément optique (4) et le rayonnement laser (8b, 8b') réfléchi sur la deuxième face (4b) de l'élément optique (4).

17. Procédé selon la revendication 16, consistant en outre à :
déterminer la position focale (F, F') du faisceau laser (2) dans la direction du faisceau (5) et/ou un état d'encrassement de l'élément optique transmissif (4) à partir du rayonnement laser (8a, 8b ; 8a', 8b') détecté.
